# DEMANDE DE BREVET EUROPEEN

(11) **EP 0 896 925 A1**
(43) Date de publication de la demande: **17.02.1999**
(21) Numéro de dépôt: 98460030.4
(22) Date de dépôt: 10.08.1998
(51) Int. Cl.: B65B 19/34, B65G 17/24

(54) **Dispositif pour organiser un flux d'objets allongés, application au conditionnement de saucisses**

(30) Priorité: 11.08.1997 FR 9710415
(71) Demandeur: Eurl Le Boutouiller, 56150 Baud (FR)
(72) Inventeur: Le Boutouiller, Christian, 56300 Saint Thuriau (FR)
(74) Mandataire: Branger, Jean-Yves

(57) **Abrégé**

Le dispositif sert à disposer des objets en file, orientés transversalement et selon un écartement correspondant à un pas ou un multiple de ce pas.

Il comprend un convoyeur (C) dont l'élément de transport est une bande sans fin constituée par une suite de rouleaux (1) légèrement écartés les uns des autres. Les rouleaux (1) sont entraînés en rotation dans le même sens le long du brin de transport (T) tandis que la bande avance, les objets à organiser étant reçus sur l'extrémité amont du convoyeur (C).

Dans une application au conditionnement en barquettes de saucisses, le dispositif est associé à un passage de barquettes (P) incliné définissant un poste de chargement (R) à l'aplomb duquel se trouve la sortie dudit dispositif.

## Description

La présente invention concerne un dispositif servant à organiser un flux d'objets allongés de section sensiblement circulaire, soit les disposer en file orientés transversalement et selon un écartement correspondant à un pas ou un multiple de ce pays. Elle concerne plus particulièrement un tel dispositif que l'on utilise pour le conditionnement de saucisses fraîches en sortie de lignes de fabrication, le terme "saucisses" étant pris dans son sens général désignant tout produit alimentaire contenu dans une portion de boyau naturel ou artificiel.

Comme la plupart des produits carnés frais, les saucisses sont conditionnées en barquette fermée au moyen d'un film transparent. Pour des raisons de présentation évidentes, et du fait qu'elles ont l'avantage d'être bien calibrées, les saucisses sont placées alignées les unes contre les autres dans la barquette qui, à cet effet, a une largueur calculée au plus juste pour admettre le nombre requis.

Actuellement, il n'existe pas sur le marché de dispositif automatique capable d'effectuer cette tâche de mise en barquette de façon satisfaisante, c'est-à-dire efficacement et dans le respect des cadences industrielles. Il faut savoir, en effet, que les saucisses au sortir des machines de fabrication sont très molles, dont très déformables, et qu'elles ont de plus une peau extrêmement glissante. Elles se prêtent par conséquent très mal à tout genre de manipulation. D'autre part, elles ont une forte tendance à prendre une forme cintrée (en banane), notamment lorsqu'elles sont fabriquées à partir de boyau naturel.

Parmi les dispositifs de conditionnement de saucisses connus, il convient de mentionner celui divulgué par le brevet EP-A-0 230 795 au nom de EPICIERS UNIS METRO-RICHELIEU INC. (Canada). Ce dispositif comprend un premier convoyeur transportant les saucisses les unes derrière les autres, orientées longitudinalement. Ledit premier convoyeur alimente un second convoyeur disposé perpendiculairement, qui définit une suite de compartiments transversaux avec une plaque de base mobile. Chaque compartiment reçoit une saucisse et la transporte à un poste de formation de groupe correspondant à un nombre déterminé de saucisses disposées côte à côte. Lorsque le nombre de saucisses est présent audit poste de formation de groupe, la plaque mobile avance pour l'aire sortir les saucisses des compartiments et les amener à un poste de déchargement. Là, elles sont resserrées les unes contre les autres par deux poussoirs latéraux agissant l'un vers l'autre. Ensuite, un poussoir derrière le groupe éjecte de la plaque mobile les saucisses qui tombent par gravité dans un conteneur se trouvant en contre-bas sur le devant de la plaque mobile. Ce dispositif donne probablement satisfaction pour conditionner des produits à déformabilité limitée tels que saucisses de Francfort ou saucisses de Strasbourg, en les déposant dans des conteneurs en plusieurs rangées superposées. Par contre, outre le fait qu'il est relativement complexe, il serait certainement inadapté pour réaliser une présentation en barquette telle que définie ci-dessus, et cela pour toutes sortes de produits, y compris des produits à forte déformabilité.

On décrit dans le document DE-A-2 643 511, un dispositif de convoyage en synchronisme de barils cylindriques, entre deux postes de traitement. Ce dispositif comporte une série de rouleaux transversaux, régulièrement espacés, entre lesquels prennent place les barils. Les rouleaux sont organisés sous la forme d'un convoyeur à bande sans fin et sont, par ailleurs, mobiles autour de leur propre axe. Ce double déplacement contribue à les faire se mouvoir entre les deux postes, en roulant sur eux-mêmes. Des guides, destinés à leur faire occuper la partie centrale des rouleaux, sont prévues en partie supérieure du dispositif. Si ces guides sont adaptés au centrage d'objets volumineux tels que des barils, ils ne le sont pas pour des objets relativement peu épais, tels que des saucisses.

La même critique peut s'appliquer au dispositif du document GB-2 064 459, destiné au positionnement d'articles en forme d'oeufs, tels que des oeufs en chocolat. Les guides prévus le long du convoyeur s'étendent au-dessus des génératrices les plus hautes des rouleaux du convoyeurs et, à ce titre, ne sont pas adaptés au centrage d'objets peu épais, susceptibles d'être déplacés en s'intercalant entre deux rouleaux.

La présente invention résulte de la recherche d'une solution simple et efficace à ces problèmes.

De manière connue en soi, il s'agit d'un dispositif d'organisation en une file d'objets allongés de section sensiblement circulaire, file dans laquelle les objets vont être orientés transversalement et écartés les uns des autres selon un pas ou un multiple de ce pas, qui comprend un convoyeur constitué par une suite de rouleaux axés transversalement et légèrement écartés les uns des autres, lesquels rouleaux sont entraînés en rotation sur eux-mêmes dans le même sens, tandis que ledit convoyeur avance, les objets à organiser étant reçus au niveau d'un poste amont du convoyeur, orientés sensiblement transversalement.

Ce dispositif se caractérise en ce qu'il comporte des moyens pour organiser transversalement le flux d'objets de telle manière qu'une même extrémité de ces objets se trouve sur une ligne longitudinale de référence en sortie du convoyeur, et en ce que ces moyens comprennent des butées montées entre deux rouleaux successifs avec une aptitude à se déplacer en translation transversalement, et un guide longitudinal placé au-dessus ou au-dessous des rouleaux le long du convoyeur, lequel guide coopère avec les butées pour les amener d'amont en aval du convoyeur d'une position adjacente à l'extrémité des rouleaux de même côté que ladite ligne longitudinale de référence à une position correspondant à ladite ligne de référence.

Lorsqu'un objet arrive sur le convoyeur, il va dont être transporté dans le sens de l'avance de la bande sans fin, tandis que le mouvement de rotation des rouleaux va avoir pour effet de l'entraîner à se placer en long dans l'espace en creux entre deux rouleaux. L'objet va donc se trouver parfaitement orienté transversalement, et séparé de ses voisins d'une distance qui est fonction du diamètre des rouleaux augmenté de leur écartement : la distance entre objets voisins sera donc égale à un pas, ou à un multiple de ce pas si un ou plusieurs espaces en creux successifs entre rouleaux sont vides.

Selon la position de réception d'un objet sur le convoyeur, la butée correspondant à l'espace entre rouleaux qu'il va occuper va venir tôt ou tard en contact contre l'extrémité de l'objet, pour ensuite le pousser. Etant donné qu'il tourne sur lui-même, l'objet va alors se déplacer transversalement dans l'espace entre les rouleaux sous l'effet de la poussée, aussi facilement que s'il était porté dans un milieu fluidisé. Les objets vont donc se trouver alignés, ce qui va faciliter, comme on le verra plus loin, leur conditionnement en barquette.

De préférence, le sens de rotation des rouleaux correspond au sens de leur déplacement.

Avantageusement, la rotation des rouleaux est obtenue en les faisant rouler sur une sole disposée sous le convoyeur.

En variante, les rouleaux peuvent être entraînés par une bande de convoyeur.

Les objets à organiser étant de section sensiblement circulaire, ils vont être entraînés en rotation sur eux-mêmes par les rouleaux, en sens inverse. Si, par ailleurs, quand ils arrivent sur le convoyeur, ces objets ne sont pas rectilignes mais qu'en revanche, ils sont facilement déformables comme c'est le cas des saucisses fraîchement fabriquées qui ont une forte tendance à prendre une forme de banane, ce mouvement de rotation sur eux-mêmes va avoir pour effet de les redresser. Et ceci sera très important pour faciliter leur conditionnement dans des barquettes.

En association avec ledit moyen pour organiser transversalement le flux d'objets, il peut être prévu d'autres moyens semblables, disposés sur l'autre côté du convoyeur. Ainsi, en plus d'avoir une extrémité placée en correspondance avec ladite ligne longitudinale de référence, les objets auront leur longueur corrigée pour peu qu'elle dépassait auparavant une limite donnée.

Dans une variante de l'invention, le convoyeur affecte la forme d'une bande sans fin avec des brins parallèles, dont l'un sert au transport des objets.

Dans une autre variante, ledit convoyeur affecte la forme d'un tambour cylindrique, les rouleaux matérialisant certaines génératrices de ce tambour.

L'invention concerne également un ensemble de conditionnement en barquettes d'objets allongés de section sensiblement circulaire tels que saucisses, comprenant d'une part un dispositif tel que défini ci-dessus, associé à un passage de barquettes incliné définissant un poste de chargement à l'aplomb duquel se trouve la sortie dudit dispositif, les barquettes avançant pas à pas au poste de chargement dans le passage à mesure que s'opère le chargement des objets.

Par ailleurs, selon d'autres caractéristiques avantageuses de cet ensemble :
- le passage comprend un élément de base constitué par le brin supérieur d'un convoyeur à bande et, à partir du poste de chargement, un élément supérieur constitué par le brin inférieur d'un convoyeur à bande, lesdits brins supérieur et inférieur formant un tunnel dont la hauteur correspond à celle des barquettes, de telle sorte que lorsque ces dernières y sont engagées, elles sont prises positivement par les convoyeurs ;
- ledit passage comporte une rive fixe d'un côté et une rive réglable de l'autre côté, et en ce que la hauteur dudit tunnel formé par les convoyeurs est réglable par déplacement en translation du convoyeur ;
- au poste de chargement, ledit dispositif comporte une goulotte dans laquelle est engagée l'extrémité aval du convoyeur, ladite goulotte comportant une fente de sortie transversale et, face à l'extrémité aval du convoyeur, un pan fortement incliné ;
- au-delà de son extrémité de sortie, le passage est prolongé par un convoyeur de reprise des barquettes, lequel convoyeur présente un premier tronçon incliné, suivi d'un second tronçon horizontal, un moyen assurant le maintien des saucisses dans les barquettes le long dudit tronçon incliné ;
- dans la variante selon lequel le convoyeur a la forme d'un tambour cylindrique, celui-ci comporte des postes de mise en place des objets sur le convoyeur et de chargement dans des barquettes, qui sont sensiblement diamétralement opposés ;
- lesdits postes occupent respectivement la position la plus haute et la plus basse du convoyeur ;
- il comprend une bande sans fin, dont un brin épouse le profil du tambour entre lesdits postes, pour retenir les objets en place entre les rouleaux, jusqu'au poste de chargement dans des barquettes ;
- il comporte des moyens d'éjection des objets au poste de chargement dans des barquettes, ces moyens consistant notamment en une bande sans fin pourvus de taquets, qui coopère avec un chemin de came, pour amener lesdits taquets entre deux rouleaux voisins, au niveau dudit poste.

Ces caractéristiques et avantages de l'invention, ainsi que d'autres, apparaîtront clairement à la lecture de la description suivante, faite en relation avec les dessins joints, dans lesquels :
- la figure 1 est une vue de côté schématique d'une partie d'un dispositif selon l'invention, illustrant le principe général de celle-ci ;
- la figure 2 est une vue de côté schématique d'un convoyeur selon l'invention ;
- la figure 3 est une vue de dessus du même convoyeur, où n'ont été représentés que certains de ses éléments ;

La figure 4 est une vue de côté schématique d'un ensemble de conditionnement de saucisses selon l'invention;
- la figure 5 est une vue de côté schématique, à échelle plus grande, d'une partie de l'ensemble de la figure 4 ; et
- la figure 6 est une vue en perspective d'un élément faisant partie d'un convoyeur selon l'invention.
- la figure 7 est une vue de côté schématique d'une partie d'une variante du dispositif selon l'invention ;
- la figure 8 est une vue analogue à la précédente, sur laquelle des éléments supplémentaires ont été représentés ;
- la figure 9 est une vue de côté schématique d'un ensemble de conditionnement de saucisses, intégrant le dispositif des figures 7 et 8.

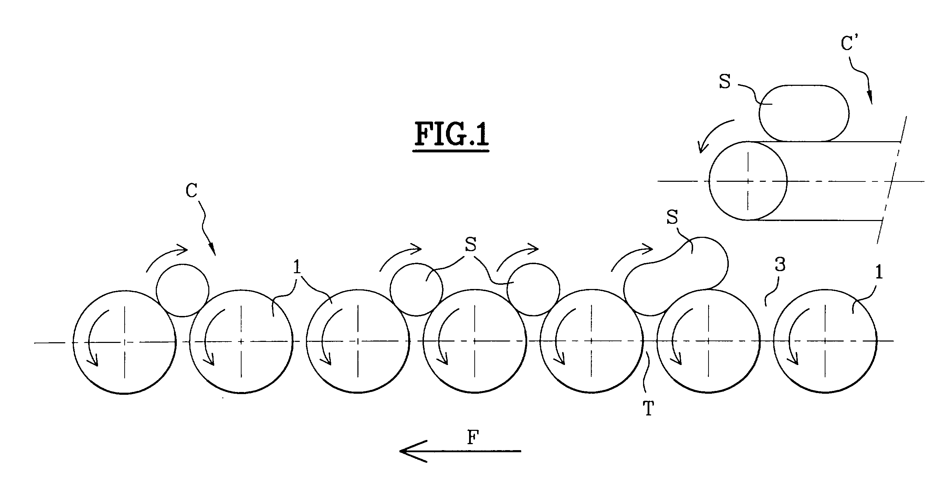

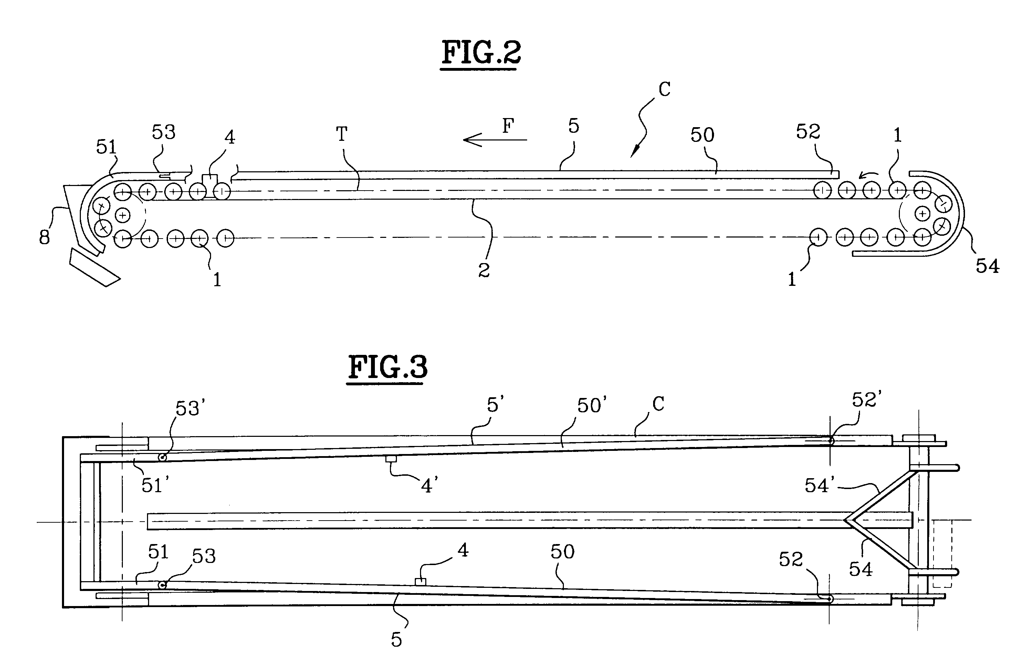

Considérant d'abord la figure 1, elle représente partiellement le brin de transport **T** d'un convoyeur **C** de type à bande sans fin tel que celui de la figure 2, dont l'élément de transport ou bande sans fin est constitué par une succession de rouleaux 1 montés légèrement écartés les uns des autres entre deux chaînes latérales, non représentées.

Selon une caractéristique de l'invention, les rouleaux 1 sont animés d'un double mouvement le long du brin de transport, à savoir qu'en plus d'avancer longitudinalement selon la flèche **F**, ils sont entraînés en rotation sur eux-mêmes, de préférence dans le sens correspondant à leur progression longitudinale. Dans une forme de réalisation préférée, comme illustré à la figure 2, les rouleaux 1 sont entraînés en rotation du fait de rouler sur une sole 2 ménagée sous le brin de transport **T**.

En un lieu voisin de son extrémité amont, le brin de transport **T** du convoyeur **C** reçoit, sortant par exemple d'un autre convoyeur **C**', des objets allongés de section sensiblement circulaire, s'agissant dans le cas présent de saucisses **S** fraîchement fabriquées dont l'orientation est sensiblement transversale. Les saucisses **S** sont susceptibles de tomber plus ou moins obliquement sur les rouleaux 1, comme illustré dans la partie droite de la figure 1, mais les rouleaux 1, du fait de leur rotation sur eux-mêmes, vont très rapidement entraîner les saucisses **S** à se coucher en long dans les espaces en creux 3 qu'ils déterminent entre eux. Les saucisses **S** vont ainsi se retrouver parfaitement orientées transversalement et disposées longitudinalement à un pas ou d'un multiple de ce pas, lequel est égal au diamètre des rouleaux 1 augmenté de leur écartement.

Par ailleurs, les saucisses **S** de section sensiblement circulaire vont être entraînées en rotation sur elles-mêmes, dans le sens inverse des rouleaux 1. Si, comme c'est en général le cas, elles sont arquées en forme de banane, elles vont être redressées de par ce mouvement sur elles-mêmes qui les empêchera en outre d'adhérer aux rouleaux.

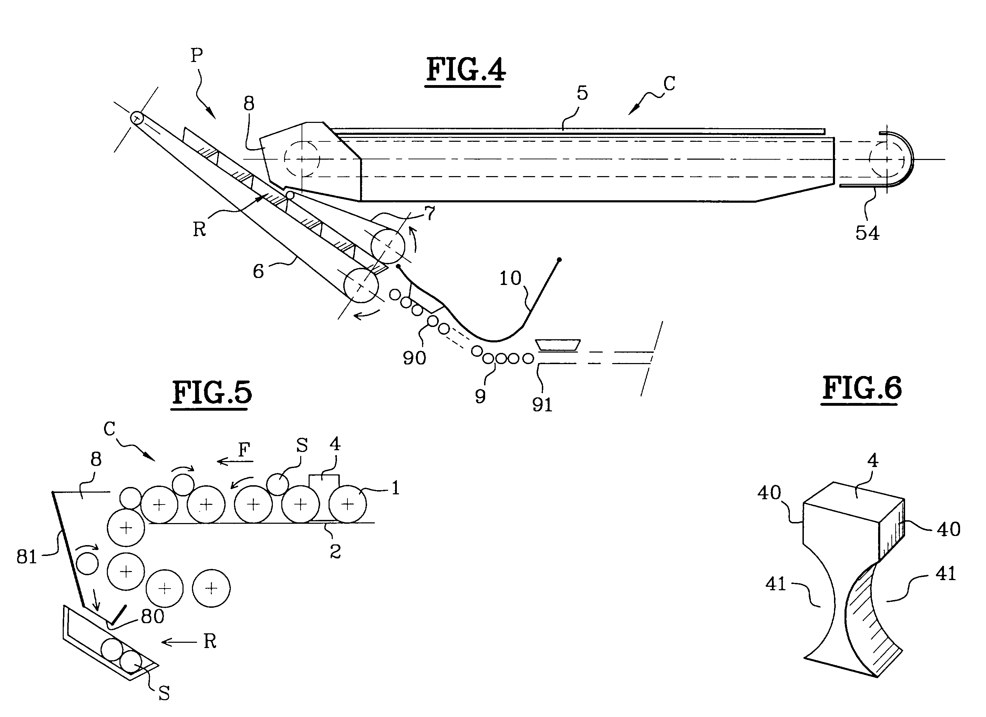

On pourra mettre à profit ce dernier avantage pour organiser transversalement le flux de saucisses **S**, soit placer leurs extrémités de même côté en correspondance avec une ligne longitudinale de référence. A cet effet, comme représenté à la figure 2, entre tous les rouleaux 1 du convoyeur **C**, sont insérées des butées 4 se trouvant toutes d'un même côté, voisines des extrémités correspondantes des rouleaux 1. Les butées 4 font saillie dans les espaces 3 entre rouleaux pour délimiter d'un côté ces espaces. Elles consistent en un petit bloc en matériau à faible coefficient de frottement (polyéthylène par exemple), tel que représenté à la figure 6, qui sur deux faces parallèles opposées 40, comporte deux mêmes concavités 41 de forme cylindrique destinées à venir épouser le contour de deux rouleaux 1 voisins. Une butée 4 insérée entre deux rouleaux 1 n'a donc plus par rapport à ceux-ci qu'une capacité de déplacement transversal.

Les butées 4 coopèrent avec un guide longitudinal 5 qui apparaît en plan à la figure 3. Le guide longitudinal 5 comprend un bras principal 50 bordant la plus grande partie du brin de transport **T** au-dessus des rouleaux 1, lequel bras 50 est articulé en 53 avec un autre bras 51 qui le prolonge en aval et qui entoure au moins en partie l'extrémité aval du convoyeur **C**. Le bras 51 est déplaçable en translation dans la direction transversale, à savoir qu'il reste en permanence orienté longitudinalement. En revanche, le bras principal 50, dont l'extrémité amont est articulée en un point fixe 52, se referme plus ou moins vers le centre du convoyeur d'amont en aval, selon la position choisie pour le bras 51, position qui dépend de celle de la ligne longitudinale de référence précitée.

A mesure qu'elles progressent le long du brin **T**, les butées 4 sont donc déplacées transversalement vers l'intérieur, jusqu'au niveau de l'articulation 53 entre les bras 50 et 51.

Considérant à nouveau la figure 3, on voit qu'un second système de butées 4' et de guide 5', identique au système 4, 5, est prévu sur l'autre côté du convoyeur **C**. Comme le bras 51, le bras 51' est déplaçable en translation dans la direction transversale, tandis que le bras 50' se referme plus ou moins vers l'intérieur d'amont en aval le long du brin de transport **T**. Le bras 51' est réglé de telle façon qu'il soit écarté transversalement du bras 50 d'une distance "**d**" choisie en fonction de la longueur requise pour les saucisses **S**.

Toute saucisse **S** admise sur le convoyeur **C**, une fois qu'elle aura été couchée en long dans un creux 3, va donc tôt ou tard rencontrer une butée 4 ou 4' qui va la recentrer. Puis, si la longueur de la saucisse **S** est excessive, son autre extrémité va rencontrer l'autre butée 4' ou 4. Prise entre les butées 4, 4' qui se rapprochent, la saucisse **S** va alors être comprimée longitudinalement de façon progressive jusqu'au niveau des articulations 53 et 53' où elle aura une longueur égale à la distance "**d**" diminuée de deux fois la largeur des butées 4 et 4'.

Les butées 4 et 4' retrouvent leurs positions de départ voisines des extrémités respectives des rouleaux 1 lors de leur cheminement sur le brin de retour du convoyeur C, entraînées par des guides 54 et 54'.

La figure 4 représente un ensemble de conditionnement de saucisses en barquettes selon l'invention, comprenant le dispositif qui vient d'être décrit, auquel est associé un passage de barquettes **P**. Le passage **P** définit avec la sortie du convoyeur **C** un poste de chargement des barquettes **R**. A cet effet, il est orienté comme le convoyeur **C**, et il forme une rampe inclinée selon un angle d'environ 35° à 70° avec l'horizontale, passant juste au-dessous de l'extrémité aval du convoyeur **C**. Le passage **P** comprend un élément de base constitué par le brin supérieur d'un convoyeur à bande 6 et, à partir du poste de chargement, un élément supérieur constitué par le brin inférieur d'un convoyeur à bande 7. Jusqu'à l'extrémité inférieure de sortie du passage **P**, ledit brin supérieur du convoyeur 6 et ledit brin inférieur du convoyeur 7 forment un tunnel dont la hauteur correspond à celle des barquettes, de telle sorte que lorsque ces dernières s'y engagent, elles sont prises positivement par les convoyeurs 6 et 7. La hauteur dudit tunnel est réglable par déplacement en translation du convoyeur inférieur 6. Latéralement, le passage **P** est limité par deux rives, non représentées, dont l'une est fixe tandis que l'autre est réglable en fonction du format des barquettes. En fonctionnement, le brin supérieur du convoyeur 6 et le brin inférieur du convoyeur 7 avancent en parfait synchronisme au pas à pas, à la même vitesse et dans le même sens. De préférence, les barquettes sont chargées en accumulation dans le passage **P**.

Au poste de chargement **R**, les saucisses arrivent dans les barquettes au sortir d'une fente transversale 80 ménagée au fond d'une goulotte 8, figure 5, dans laquelle est engagée l'extrémité aval du convoyeur **C**. Facc à cette extrémité, la goulotte comporte un pan fortement incliné 81 sur lequel sont reçues les saucisses échappant du convoyeur **C** sous l'effet de leur poids et de la force centrifuge. On peut remarquer, figure 5, que si les saucisses **S** tournent toujours sur elles-mêmes au contact du pan 81, cette rotation est favorable puisque dans le sens du roulement vers le bas sur le pan 81.

Au-delà de son extrémité de sorte, le passage **P** est prolongé par un convoyeur 9 de reprise des barquettes, lequel convoyeur 9, avantageusement de type à rouleaux ou à galets fous, présente un premier tronçon 90 incliné comme le passage P, suivi d'un second tronçon horizontal 91. Le long du premier tronçon incliné 90, il est prévu un moyen assurant le maintien des saucisses dans les barquettes. En pratique, il peut s'agir tout simplement d'une pièce de toile 10 montée de façon lâche au-dessus du tronçon 90 et qui, de par sa souplesse et son poids, vient s'appliquer en couverture sur les barquettes lors de leur passage.

Avant de faire fonctionner l'ensemble, il convient de procéder à plusieurs réglages, soit :
- le réglage de la rive non fixe du passage **P** ;
- le réglage sur le convoyeur **C** du guide 5 de même côté que la rive fixe du passage **P**, lequel guide 5 doit être positionné de telle manière que ladite ligne de référence longitudinale du convoyeur **C** mentionnée précédemment coïncide avec l'arête interne de même côté du fond des barquettes ;
- le réglage du nombre de saucisses admises dans une barquette.

En fonctionnement, le chargement d'une barquette s'opère comme suit. Une barquette arrivant est détectée présente au poste de chargement **R**, son bord avant se trouvant juste au niveau de l'entrée entre les convoyeurs 6 et 7. Le nombre fixé de saucisses **S** va alors être admis dans la barquette qui, saisie entre les convoyeurs 6 et 7, va avancer d'un pas entre chaque réception, les saucisses étant considérées reçues lors de leur passage dans la goulotte 8 qui est détecté au moyen d'un capteur. Une fois la barquette remplie, les convoyeurs 6 et 7 vont avancer de manière à dégager la barquette remplie du poste de chargement, et jusqu'à ce que la présence de la barquette suivante au poste de chargement **R** soit détectée, un nouveau cycle pouvant commencer. La vitesse du convoyeur **C** est réglée de telle manière que sauf anomalie, il puisse avancer en continu.

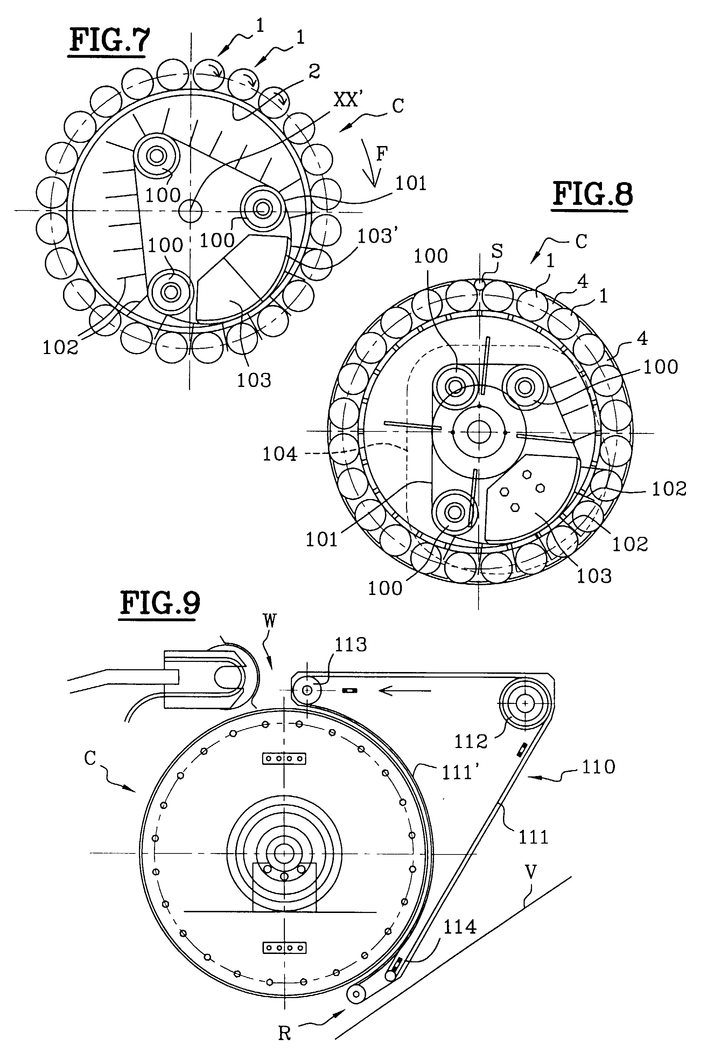

Le dispositif représenté aux figures 7 et 8 se distingue du précédent par le fait que le convoyeur **C** affecte la forme d'un tambour cylindrique, avec les rouleaux 1 matérialisant certaines génératrices de ce tambour.

Comme dans l'exemple déjà décrit, les rouleaux 1 sont montés légèrement écartés les uns des autres entre deux chaînes latérales, non représentées.

On a représenté par la flèche **F**, à la figure 7, la direction générale d'avancement - c'est-à-dire de rotation - du convoyeur **C**, autour de l'axe honzontal et transversal **XX'.**

Les rouleaux sont quant à eux soumis à une rotation autour de leur propre axe, par exemple dans le même sens que le sens d'avancement du convoyeur. Cette rotation peut être occasionnée par le fait que les rouleaux 1 roulent sur une sole 2 ménagée à l'intérieur du tambour.

Comme dans le cas précédent, le dispositif est équipé de butées 4 qui font saillie dans les espaces situés entre les rouleaux 1 pour délimiter ces espaces d'un côté. Ces butées consistent, comme précédemment, en de petits blocs en maténau à faible coefficient de frottement, dont la forme est identique à celle représentée à la figure 6.

Il peut être prévu, du côté opposé des rouleaux, un second jeu de butée 4' identiques aux butées 4.

Dans un simple but de simplification, on a pas représenté sur les figures 7 à 9, les guides 5 et 5' qui régissent le déplacement des butées 4 et 4' le long des rouleaux.

Aux figures 7 et 8, sont représentés trois rouleaux 100, d'axes parallèles à l'axe XX' et disposés à l'intérieur du tambour constituant le convoyeur **C**. L'un de ces rouleaux est moteur. Une bande sans fin 101 est mise en place sur ces trois rouleaux et passe également le long d'une pièce 103. Celle-ci présente une surface convexe 103' formant chemin de came, dirigée vers le convoyeur, sur laquelle glisse la bande sans fin.

Le chemin de came 103' se trouve à proximité immédiate des rouleaux 1, dans la partie basse et à droite du convoyeur **C**, lorsqu'on considère la figure 7.

Le sens de déplacement de la bande 101 est identique à celui du convoyeur.

Sur la face supérieure de la bande sans fin sont prévus, à distance régulière, des taquets 102 en forme de doigts. Lcur écartement est sensiblement voisin de celui qui sépare deux rouleaux 1 voisins.

La vitesse de déplacement de la bande sans fin est prévue de telle manière que les taquets 102, dans la zone où la bande coopère avec le chemin de came 103', viennent s'intercaler entre les rouleaux, pour occuper l'espace disposé entre les butées 4 et 4'.

On comprend qu'une fois que la bande a dépassé le chemin de came 103', les taquets se rétractent en effectuant un mouvement de retrait à l'intérieur du convoyeur.

A la figure 8 est représentée, sous la forme d'un trait pointillé 104, la position des extrémités libres des taquets 102. On constate que cette position interfère avec la position des objets **S** à transporter uniquement en partie basse du dispositif.

A la figure 9, est représenté partiellement un ensemble de conditionnement de saucisses utilisant le dispositif tel que décrit. Cet ensemble comporte un poste de mise en place **W** des saucisses sur le convoyeur, qui occupe sensiblement la position la plus haute de ce convoyeur. Le poste de chargement **R** des saucisses dans des barquettes est sensiblement diamétralement opposé, et occupe la partie basse du convoyeur.

Pour maintenir en place les saucisses entre les rouleaux du poste **W** au poste **R**, il est prévu une bande sans fin 111 qui coopère avec des rouleaux de renvoi 112 à 114, dont un brin 111' épouse le profil du tambour entre ces deux postes, pour retenir les saucisses entre les rouleaux.

Lorsque les saucisses ne sont plus retenues par le brin 111', elles ont tendance à se détacher du tambour par gravité. Cette évacuation est facilité par le fait que les taquets 102 précédemment décrits viennent à les expulser des rouleaux.

A ce niveau, les saucisses sont récupérées dans des barquettes non représentées. Le poste de chargement des saucisses **S** peut être équipé des mêmes moyens que ceux décrits en référence aux figures 5 et 6.

Le principal intérêt de ce mode de réalisation consiste dans le fait qu'il est relativement compact, ce qui signifie qu'il occupe beaucoup moins de place qu'un convoyeur à bande sans fin tel que décrit plus haut.

## Revendications

1. Dispositif d'organisation en une file d'objets allongés de section sensiblement circulaire (S), file dans laquelle les objets (S) vont être orientés transversalement et écartés les uns des autres selon un pas ou un multiple de ce pas, qui comprend un convoyeur (C) constitué par une suite de rouleaux (1) axés transversalement et légèrement écartés les uns des autres, lesquels rouleaux (1) sont entraînés en rotation sur eux-mêmes dans le même sens tandis que ledit convoyeur avance, les objets (S) à organiser étant reçus au niveau d'un poste amont du convoyeur (C), orientés sensiblement transversalement, caractérisé en ce qu'il comporte des moyens (4, 5) pour organiser transversalement le flux d'objets (S) de telle manière qu'une même extrémité de ces objets (S) se trouve sur une ligne longitudinale de référence en sortie du convoyeur (C), et en ce que ces moyens comprennent des butées (4) montées entre deux rouleaux (1) successifs avec une aptitude à se déplacer en translation transversalement, et un guide longitudinal (5) placé au-dessus ou au-dessous des rouleaux (1) le long du convoyeur (C), lequel guide (5) coopère avec les butées (4) pour les amener d'amont en aval du convoyeur (C) d'une position adjacente à l'extrémité des rouleaux (1) de même côté que ladite ligne longitudinale de référence à une position correspondant à ladite ligne de référence.

2. Dispositif selon la revendication 1, caractérisé en ce que le sens de rotation des rouleaux (1) correspond au sens de leur déplacement.

3. Dispositif selon la revendication 2, caractérisé en ce que la rotation des rouleaux (1) est obtenue en les faisant rouler sur une sole (2) disposée sous le convoyeur (C).

4. Dispositif selon l'une des revendications 1 ou 3, caracténsé en ce qu'il comporte d'autres moyens pour organiser transversalement le flux d'objets (4', 5') identiques aux précédents (4, 5), disposés sur l'autre côté du convoyeur (C).

5. Dispositif selon l'une des revendications 1 à 4, caractérisé en ce que ledit convoyeur (C) affecte la forme d'une bande sans fin avec des brins parallèles, dont l'un (T) sert au transport des objets.

6. Disposition selon l'une des revendications 1 à 4, caractérisé en ce que ledit convoyeur (C) affecte la forme d'un tambour cylindrique, les rouleaux (1) matérialisant certaines génératrices de ce tambour.

7. Ensemble de conditionnement en barquettes d'objets allongés de section sensiblement circulaire (S) tels que saucisses, caractérisé en ce qu'il comprend un dispositif selon l'une des revendications précédentes associé à un passage de barquette incliné (P) définissant un poste de chargement (R) à l'aplomb duquel se trouve la sortie dudit dispositif, les barquettes avançant pas à pas au poste de chargement (R) dans le passage (P) à mesure que s'opère le chargement des objets (S).

8. Ensemble selon la revendication 7, caractérisé en ce que le passage (P) comprend un élément de base constitué par le brin supérieur d'un convoyeur à bande (6) et, à partir du poste de chargement (R), un élément supérieur constitué par le brin inférieur d'un convoyeur à bande (7), lesdits brins supérieur et inférieur formant un tunnel dont la hauteur correspond à celle des barquettes, de telle sorte que lorsque ces dernières y sont engagées, elles sont prises positivement par les convoyeurs (6, 7).

9. Ensemble selon la revendication 8, caractérisé en ce que ledit passage (P) comporte une rive fixe d'un côté et une rive réglable de l'autre côté, et en ce que la hauteur dudit tunnel formé par les convoyeurs (6, 7) est réglable par déplacement en translation du convoyeur (6).

10. Ensemble selon l'une des revendications 7 à 9, caractérisé en ce qu'au poste de chargement (R), ledit dispositif comporte une goulotte (8) dans laquelle est engagée l'extrémité aval du convoyeur (C), ladite goulotte comportant une fente de sortie transversale (80) et, face à l'extrémité aval du convoyeur (C), un pan fortement incliné (81).

11. Ensemble selon l'une des revendications 7 à 10, caractérisé en ce qu'au-delà de son extrémité de sortie, le passage (P) est prolongé par un convoyeur (9) de reprise des barquettes, lequel convoyeur (9) présente un premier tronçon incliné (90), suivi d'un second tronçon horizontal (91), un moyen (10) assurant le maintien des saucisses dans les barquettes le long dudit tronçon incliné (90).

12. Ensemble selon l'une des revendications 7 ou 8, dans lequel le convoyeur (C) a la forme d'un tambour cylindrique, caractérisé en ce qu'il comporte des postes de mise en place (W) des objets (S) sur le convoyeur (C) et de chargement dans des barquettes (R), qui sont sensiblement diamétralement opposés.

13. Ensemble selon la revendication 12, caractérisé en ce que lesdits postes (W ; R) occupent respectivement la position la plus haute et la plus basse du convoyeur.

14. Ensemble selon l'une des revendications 12 ou 13, caracténsé en ce qu'il comprend une bande sans fin (111), dont un brin (111') épouse le profil du tambour entre lesdits postes (W ; R), pour retenir les objets (S) en place entre les rouleaux (1), jusqu'au poste de chargement (R) dans des barquettes.

15. Ensemble selon l'une des revendications 12 à 14, caractérisé en ce qu'il comporte des moyens d'éjection des objets (S) au poste de chargement (R) dans des barquettes, ces moyens consistant notamment en une bande sans fin (101) pourvus de taquets (102), qui coopère avec un chemin de came, pour amener lesdits taquets (102) entre deux rouleaux (1) voisins, au niveau dudit poste (R).
